# EUROPÄISCHE PATENTANMELDUNG

(11) **EP 0 808 600 A1**
(43) Veröffentlichungstag der Anmeldung: **26.11.1997**
(21) Anmeldenummer: 97108120.3
(22) Anmeldetag: 20.05.1997
(51) Int. Cl.: A47J 45/06

(54) **Handgriff, Stiel oder Ballengriff für ein Kochgefäss**

(30) Priorität: 24.05.1996 IT MI960399 U
(71) Anmelder: BALLARINI PAOLO & FIGLI S.p.A., 46017 Rivarolo Mantovano (MN) (IT)
(72) Erfinder: Ferron, Francesco, Ing., 26015 Casalmaggiore (CR) (IT)
(74) Vertreter: Mayer, Hans Benno, Dipl.-Ing.

(57) **Zusammenfassung**

Handgriff, wie Stiel oder Ballengriff für ein Kochgefäss, wie z.B. eine Pfanne, einen Kochtopf, einen Bräter oder einen ähnlichen Behälter, wobei mit einem Ansatzstück (2), das mit dem Behälterkörper fest verbunden ist, ein erstes Bauteil (4) zur Schaffung eines Griffes aus einem wärmehärtbaren Harz, das mit Feststoffteilen angereichert ist, vorgesehen ist, und mit diesem ersten Bauteil ein zweites Bauteil (5,10) zur Schaffung eines Handgriffes verbunden ist, das aus thermoplastischem Material besteht.

## Beschreibung

Die vorstehende Erfindung betrifft einen Handgriff, wie einen Henkel, einen Stiel oder einen Ballengriff fuer ein Kochgefaess.

Unter dem Begriff Kochgefaess sind Pfannen, Toepfe, Braeter und aehnliche Behaelter zu verstehen.

Es ist bekannt, dass Kochgefaesse Teile aus Metall aufweisen, die mit dem Gefaess verbunden sind.

Ueblicherweise werden mit diesen Metallteilen Griffe, wie z.B. Handgriffe, Henkel Stiele oder Ballengriffe verbunden, um die Moeglichkeit zu schaffen, das warme Kochgefaess zu erfassen.

In naheliegender Weise wird die metallische Halterung, die fest mit dem Kochgefaess verbunden ist, waehrend des Gebrauchs des Kochgefaesses, das auf einer Waermequelle ruht, stark erwaermt.

Um die Moeglichkeit zu schaffen, das warme Kochgefaess zu greifen, werden die Metallbeschlaege ueblicherweise mit Handgriffen, Henkeln, Stielen oder Ballengriffen ummantelt oder geschuetzt. Diese Griffteile bestehen aus thermisch isolierendem Material.

Es ist vom Stand der Technik her bekannt, waermehaertende Kunststoffe, die auch unter der Handelsbezeichnung "Bakelite" bekannt sind, zur Herstellung dieser Griffe, Stiele und Henkel einzusetzen.

Dieses waermehaertende Material besteht ueblicherweise aus Phenolharz, das mit Holzspaenen oder geeigneten Mineralien angereichert wurde. Diese aus Phenolharz und Feststoffteilen bestehende Mischung hat ausgezeichnete waermeisolierende Wirkung und weist auch hohen Widerstand gegen mechanische Belastung auf und ermoeglicht ein oefteres Waschen der Kochgefaesse z.B. in einem Geschirrspueler, ohne sich dabei in seinem auesseren Erscheinungsbild wesentlich zu veraendern.

Die aus Phenolharz und Feststoffteilen oder mineralischen Teilchen angereicherten Materialien weisen aber den Nachteil auf, dass eine Formgebung dieser Materialien technisch schwierig ist.

So besteht keine Moeglichkeit, sehr komplexe Formen herzustellen und es besteht auch keine Moeglichkeit, das Phenolharzgemisch in gewuenschter Weise einzufaerben.

Demzufolge haben die mit dem beschriebenen Material hergestellten Griffe, Stiele oder Henkel meist schwarzgraue Einfaerbung und diese Einfaerbung erfaehrt nach zahlreichen Waschvorgaengen eine Wertminderung aesthetischer Natur, was natuerlich vom Benuetzer des Kochgefaesses nicht gewuenscht ist und auch den Anforderungen an moderne und oft sehr kostenintensive Kochgefaesse nicht gerecht wird.

Des weiteren hat sich herausgestellt, dass die bekannten Griffe, Stiele oder Henkel oefters anfaellig gegen mechanische Belastungen sind und oft mit der Zeit bruechig werden und aus diesem Grund nur beschraenkte Widerstandsfaehigkeit gegen grobe Schlaege und andere derartige Belastungen haben.

Ferner musste festgestellt werden, dass bei den bekannten Griffen, Stielen oder Henkeln wenig Flexibilitaet hinsichtlich der Auswahl der gewuenschten Form sowie der gewuenschten Einfaerbung gegeben ist.

Um diese Nachteile zu vermeiden, wurde bereits vorgeschlagen, die Griffe, Stiele oder Henkel, bestehend aus Phenolharz mit grauschwarzer Faerbung, mit einem Ueberzug aus thermoplastischem Material zu versehen und dabei diesen thermoplastischen Ueberzug, mit beliebiger Einfaerbung, unter Zuhilfenahme von formschluessigen oder kraftschluessigen Verbindungen, zu verzieren. Dabei wurden vorgefertigte Teile aus thermoplastischem Material durch Steck- oder Schnappverbindungen befestigt.

In anderen Faellen wurde das thermoplastische Material unter Verwendung von Schrauben oder Nieten am Griffkoerper befestigt.

Es ist erkennbar, dass die erforderlichen Montagearbeiten zum Anbringen dieser zusaetzlichen Bauteile erhebliche Zeit in Anspruch nahmen und somit zu einem Anwachsen der Fertigungskosten fuehrten. Des weiteren bestand die Gefahr eines Loesens zwischen Griff oder Henkel aus waermehaertendem Material und den aus thermoplastischem Material hergestellten Bauteilen. Des weiteren, bei Befestigen der thermoplastischen Teile unter Verwendung von Schrauben, ergab sich der Nachteil, dass sich diese Befestigungsteile loesen und deshalb verloren werden konnten.

Des weiteren stellten Schlitze oder Spalte, die im Griffteil vorzusehen waren und fuer das Einfuehren von Halterungen oder Griffen vorzusehen waren, nicht hygienische Bereiche dar, in denen sich Schmutz ablagern und ansammeln konnte.

Es ist daher Aufgabe der vorstehenden Erfindung, die Nachteile des Standes der Technik zu vermeiden und einen Griff, Stiel oder Henkel fuer ein Kochgefaess zu schaffen, mit dem es moeglich wird, die Nachteile des Standes der Technik zu vermeiden und besonders die Moeglichkeit zu schaffen, einen einteilig ausgebildeten Griff zur Verfuegung zu stellen, der auf einfache Weise und mit einfachen, technischen Mitteln herstellbar ist, und auf die Verwendung von Befestigungsmitteln, wie Schrauben oder Nieten, verzichten kann, und des weiteren sehr gute Eigenschaften hinsichtlich mechanischer Belastbarkeit und hinsichtlich thermischer Isolierung aufweist, und trotzdem eine freie Auswahl hinsichtlich der Farben sowie der Formgebung des zu ergreifenden Teiles des Griffes erlaubt, und vor allem die Moeglichkeit schafft, Schlitze und Spalte am Griff zu vermeiden und dadurch die Schaffung von nicht hygienischen Zonen, in denen eine Schmutzablagerung erfolgen kann.

Nach der vorgeschlagenen Erfindung wird diese Aufgabe dadurch geloest, dass mit einer Halterung, die fest mit dem Koerper des Kochgefaesses verbunden ist, ein erstes Bauteil zur Schaffung eines Griffes verbunden ist, und dieses Bauteil aus waermehaertendem Harz besteht, das mit Feststoffteilen angereichert ist, und dass mit diesem ersten Bauteil durch formschluessige Verbindung ein zweites, einen Griff bildendes Bauteil aus thermoplastischem Kunststoff, verbunden ist.

Auf diese Weise wird zwischen dem Koerper des Kochgefaesses und dem Griff ein Zwischenteil gebildet, das ausserordentlich bestaendig gegen mechanische Belastungen ist und gute hitzeisolierende Merkmale aufweist.

Das isolierende Bauteil ist, in vorteilhafter Weise aus einer Mischung, bestehend aus Phenolharz und Feststoffteilen aufgebaut.

Ferner wird ein Griffteil fuer den Griff oder Henkel geschaffen, der aus thermoplastischem Material besteht und auf einfache Weise verformbar oder verpressbar ist und vor allem in freier Wahl eingefaerbt werden kann.

In der Praxis ist das aus thermoplastischem Kunststoff bestehende Bauteil mit dem aus waermehaertendem Material, ohne die Vorsehung von Schlitzen und ohne die Notwendigkeit von Schrauben oder Nieten, verbunden. Das thermoplastische Material wird in einfacher Weise auf das aus waremehaertendem Harz bestehende Material aufgepresst und mit diesem formschluessig verbunden.

Mit besonderem Vorteil weist das aus waermehaertendem Harz bestehende Bauteil auf der vom Kochgefaess abgewandten Seite einen stielartigen Vorsprung auf, mit dem das Bauteil, bestehend aus thermoplastischem Material, verbunden wird, das an seinem Ende einen Durchgang aufweist.

Es hat sich ferner als vorteilhaft erwiesen, dass das Bauteil aus waermehaertendem Harz den inneren Kern eines Griffes oder Henkels darstellt, der auf seiner Aussenseite mit einer Huelle aus thermoplastischem Kunststoff ummantelt ist.

Es hat sich ferner auch als vorteilhaft erwiesen, dass der aus waremehaertendem Material bestehende Griff durchgehende Oeffnungen aufweist, in welche Verankerungszapfen waehrend des Auftragens der aus thermoplastischem Material bestehenden Umhuellung eintreten.

Es hat sich ferner als vorteilhaft erwiesen, dass jener Teil des Griffes, der aus waermehaertendem Harz besteht, teilweise von Laengsrippen und/oder Umfangsrippen aus thermoplastischem Material ummantelt ist, um mit diesen Erhebungen und Absenkungen die Griffigkeit des Stieles oder Henkels zu verbessern.

Der Erfindungsgegenstand wird nun genauer beschrieben und anhand von Ausfuehrungsbeispielen in den Zeichnungen dargestellt.

Es zeigen:
Figur 1 den Teil einer Bratpfanne, die mit einer ersten Ausfuehrungsform eines Griffes gemaess der vorstehenden Erfindung ausgeruestet ist;
Figur 2 im Schnitt einen Teil einer Pfanne, die mit einem Griff ausgeruestet ist, der mit einer mantelartigen Umhuellung aus thermoplastischem Material ummantelt ist;
   und
Figur 3 einen Griff aus Phenolharz, bestueckt mit Laengsrippen sowie mit Umfangsrippen, bestehend aus thermoplastischem Kunststoff.

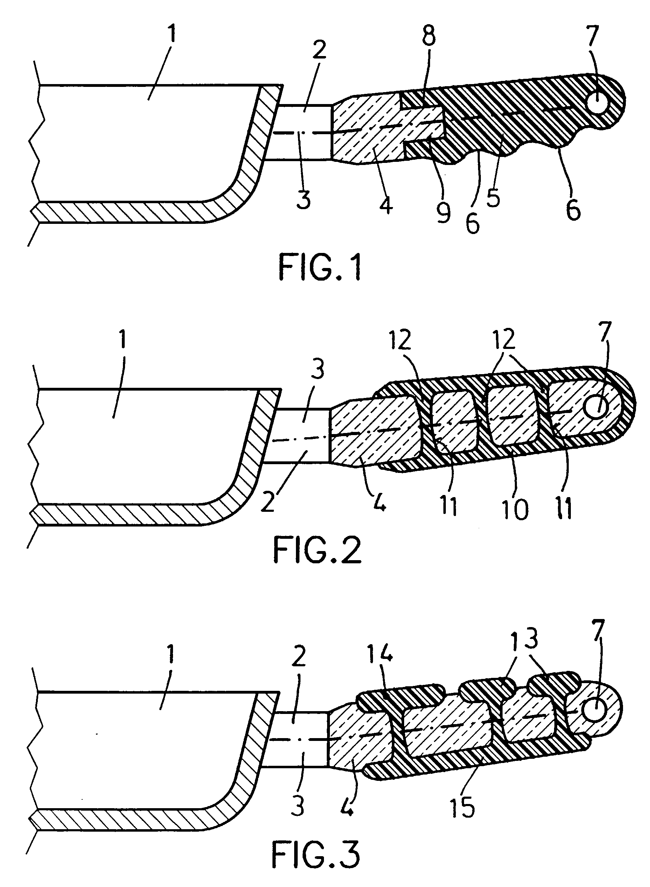

Der Figur 1 kann im Schnitt ein Teilstueck einer Pfanne 1 entnommen werden. Mit der Pfanne 1 ist eine Verlaengerung 2 verbunden, die z.B. aus einem kleinen, metallischen Rohrstueck besteht, welches einstueckig mit dem Koerper des Kochgefaesses verbunden ist.

Das Rohrstueck 2 steht mit einem Verstaerkungskern 3 in Verbindung, der z.B. von einem Verbindungsstueck aus Metall z.B. einer Schraube besteht, welche die Aufgabe hat, das Bauteil 4 mit dem Kochgefaess 1 zu verbinden.

Mit dem freien Ende des Rohrstueckes 2 ist ein Zwischenstueck 4 verbunden, das in vorteilhafter Weise aus waermehaertendem Harz besteht, z.B. aus Phenolharz, das unter Zwischenschaltung eines Rohrstueckes 2 mit dem Koerper des Kochgefaesses 1 verschraubt wird.

Das Bauteil 4, das aus waermehaertendem Phenolharz, welches durch Festteile angereichert wurde, besteht, weist eine verhaeltnismaessig einfache Formgebung auf und dient lediglich als Verbindungsstueck und Isolierteil zwischen dem Kochgefaess 1 und dem eigentlichen Griffteil, das mit 5 gekennzeichnet ist.

Der Griff 5 ist nach der Erfindung aus thermoplastischem Kunststoff unter Einsatz eines Pressverfahrens oder Druckgussverfahrens hergestellt, mit dem der Kunststoff auf das schaftartige Bauteil aufgebracht wird, bevor dieses an dem Kochgefaess 1 montiert und befestigt wird.

Das thermoplastische Material kann auf einfache Weise verarbeitet werden. Ferner kann das thermoplastische Kunststoffmaterial nach freier Wahl eingefaerbt werden und auch sehr komplexe Formen aufweisen.

So koennen z.B. im unteren Teil des Handgriffes 5 Wellungen 6 zur Verbesserung der Griffigkeit des Handgriffes vorgesehen werden, wogegen der obere Teil des Handgriffes glatt ausgefuehrt ist.

Am freien Ende des Handgriffes ist ferner eine Durchgangsbohrung 7 vorgesehen.

Der Griff 5 weist eine Ausnehmung 8 auf, mit der auf einfache Weise das schaftartige, abstehende Bauteil 9, welches keineren Durchmesser aufweist und vom Koerper 4 aus waermehaertendem Material absteht, verbindbar ist.

Der Figur 2 kann entnommen werden, dass das aus waermehaertendem Material bestehende Bauteil 4 mit dem abstehenden Rohrstueck fest verbunden ist. Dieses Bauteil 4 ist einstueckig mit dem Kochgefaess 1 verbunden und erstreckt sich ueber die gesamte Laenge des Griffes.

Ferner kann der Zeichnung entnommen werden, dass das Bauteil aus waermehaertendem Material von einer Umhuellung 10 aus thermoplastischem Material ummantelt ist.

Das thermoplastische Material ist einfach aufbringbar und einfach verformbar. Das Material der Huelle 10 kann ferner beliebig eingefaerbt werden.

Um die Umhuellung 10 gegenueber dem Bauteil 4 aus waermehaertendem Material festlegen zu koennen, weist das Bauteil Druchgangsoeffnung 11 auf, die waehrend des Aufbringens der Umhuellung mit kleinen Verankerungsrippen 12 aus thermoplastischem Kunststoff gefuellt werden.

Dadurch wird vermieden, dass die Umhuellung 10 aus thermoplastischem Material vom Bauteil aus waremehaertendem Material, z.B. bestehend aus einem Phenolharzgemisch, leicht abgezogen werden kann.

Das Kochgefaess 1 nach Figur 3 weist ein Bauteil 4 aus Phenolharz auf, das mit der rohrartigen Verlaengerung 2, die am Koerper des Kochgefaesses angeordnet ist, verbunden ist.

Umfangsrippen 13 sowie Verdickungen 14 oder Laengsrippen 15 aus thermoplastischem Material werden am Bauteil 4 aus waermehaertendem Material aufgebracht und verbessern somit wesentlich das aeussere Erscheinungsbild des Handgriffes.

Ferner wird auch die Griffigkeit und Handhabung des Kochgefaesses 1 ueber dem Handgriff verbessert.

Ein Verfahren zum Verbinden des Grundteiles des Handgriffes, bestehend aus waermehaertendem Material mit einer eingefaerbten Umhuellung, bestehend aus thermoplastischem Kunststoff, erfolgt durch einen Warmpressvorgang, d.h. ueber einem ersten Pressvorgang, mit dem das waermehaertende Material verformt wird, und ueber einen darauffolgenden Aufpressvorgang zum Aufbringen eines thermoplastischen Kunststoffmaterials (Doppelpressverfahren). Somit wird das waeremehaertende Material des Griffteiles mit einem thermoplastischen und eingefaerbten Material ummantelt. Dabei fuellt des thermoplastische Kunststoffmaterial alle durchgehenden Bohrungen und Oeffnung, die in das Bauteil aus waermehaertendem Material eingebracht worden sind, aus.

Mit anderen Worten, es wird anfangs ein Bauteil aus waermehaertendem Material (Bakelite) hergestellt und mit einem darauffolgenden Press- oder Druckgiessvorgang wird in die Form thermoplastisches Material eingebracht und dadurch eine Verlaengerung des Griffes oder eine Ummantelung des Griffes mit thermoplastischem Material durchgefuehrt.

Es ist einfach erkennbar, dass mit der Schaffung eines mehrteiligen Handgriffes, bei dem das aus waermehaertendem Material bestehende Teil heiss mit thermoplastischem Kunststoff verbunden wird, eine sehr innige und dauerhafte Verbindung zwischen den beiden Materialien erzielt wird.

Des weiteren werden unerwuenschte Ausnehmungen und Schlitze sowie Oeffnungen vermieden, in die in unerwuenschter Weise Schmutz oder Speisereste eindringen koennten, welche nur schwer entfernbar sind.

Die Ummantelung aus thermoplastischem Material kann in idealer Weise dazu genutzt werden, die Formgestaltung des Griffes sowie die Einfaerbung desselben guenstig zu beinflussen.

Dank der Ummantelung des Handgriffes mit einem thermoplastischen Kunststoff wird auch kein Verblassen des Handgriffes nach wiederholten Waschvorgaengen eintreten, und durch das thermoplastische Material, das hohe Elastizitaet und Bestaendigkeit gegen Stoesse und Schlaege aufweist, wird auch eine Beschaedigung des Handgriffes bei ploetzlich auftretenden, mechanischen Beanspruchungen vermieden.

## Patentansprüche

1. Handgriff, wie Stiel oder Ballengriff fuer ein Kochgefaess, wie eine Pfanne, einen, Kochtopf, einen Braeter oder aehnlichen Behaeltern, **dadurch gekennzeichnet,** dass mit einer Halterung (2), die fest mit dem Koerper des Kochgefaesses (1) verbunden ist, ein erstes Bauteil (4) zur Schaffung eines Griffstueckes (4) verbunden ist, und dieses Bauteil aus waermehaertendem Harz besteht, das mit Festenstoffteilen angereichert ist, und dass mit diesem ersten Bauteil durch formschluessige Verbindung ein zweites, einen Griff (5) bildendes, Bauteil aus thermoplastischem Kunststoff verbunden ist.

2. Handgriff, nach Patentanspruch 1, **dadurch gekennzeichnet,** dass das Bauteil (4) aus waermehaertendem Harz auf der dem Kochgefaess (1) entgegengesetzten Seite einen zapfenartigen Vorsprung (9) aufweist, mit dem das Bauteil (5) aus thermoplastischem Material ueber eine Ausnehmung (8) verbunden wird.

3. Handgriff, nach Patentanspruch 1, **dadurch gekennzeichnet,** dass das Bauteil (4) aus waermehaertendem Harz als Kernstueck eines Griffes ausgebildet ist und an seinem Aussenumfang mit einer Huelle (10) aus thermoplastischem Kunststoff (Figur 2) ummantelt ist.

4. Handgriff, nach Patentanspruch 1, **dadurch** **gekennzeichnet,** dass der Griff aus waermehaertendem Harz Durchgangsbohrungen (11) aufweist, in die Verankerungsrippen (12) waehrend des Aufbringes der Umhuellung (10) aus thermoplastischem Kunststoff eintreten (Figur 2).

5. Handgriff, nach Patentanspruch 1, **dadurch gekennzeichnet**, dass der Koerper des Bauteiles (4) aus waermehaertendem Harz teilweise mit Laengsrippen (14, 15) und/oder Umfangsrippen (13) aus thermoplastischem Material beschichtet ist, und diese Rippen Erhoehungen sowie Vertiefungen zur Verbesserung der Griffigkeit aufweisen (Figur 3).

6. Handgriff, nach Patentanspruch 1 - 5, **dadurch gekennzeichnet**, dass der Griff (4) von einem Metallstab (3) durchdrungen wird, der mit dem Koerper des Kochgefaesses (1) verbunden ist.

7. Handgriff, nach Patentanspruch 1, **dadurch gekennzeichnet,** dass das Bauteil (4) aus waermehaertendem Material aus Phenolharz besteht, welches mit Feststoffteilen angereichert ist.

8. Handgriff, nach Patentanspruch 1, **dadurch gekennzeichnet,** dass die Ummantelung aus thermoplastischem Material entlang der Oberseite des Handgriffes (4, 5) glatt ausgebildet ist und an der Unterseite des Griffes wellenartigen Verlauf (6) aufweist.

9. Handgriff, nach Patentanspruch 1, **dadurch** **gekennzeichnet,** dass am freien Ende eine Durchgangsbohrung (7) vorgesehen ist.
